(19) Europäisches Patentamt
European Patent Office
Office européen des brevets

(11) EP 4 484 051 A1

(12) EUROPEAN PATENT APPLICATION
published in accordance with Art. 153(4) EPC

(43) Date of publication:
**01.01.2025 Bulletin 2025/01**

(21) Application number: **23756356.4**

(22) Date of filing: **14.02.2023**

(51) International Patent Classification (IPC):
***B23K 35/22*** *(2006.01)* ***B22F 1/00*** *(2022.01)*
***B22F 1/16*** *(2022.01)* ***B22F 1/17*** *(2022.01)*
***B23K 1/00*** *(2006.01)* ***B23K 35/363*** *(2006.01)*
***H01B 1/22*** *(2006.01)*

(52) Cooperative Patent Classification (CPC):
**B22F 1/00; B22F 1/16; B22F 1/17; B23K 1/00; B23K 35/0205; B23K 35/22; B23K 35/3601; H01B 1/22**

(86) International application number:
**PCT/JP2023/004946**

(87) International publication number:
**WO 2023/157831 (24.08.2023 Gazette 2023/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.02.2022 JP 2022024543**

(71) Applicant: **FURUKAWA ELECTRIC CO., LTD.**
**Tokyo 100-8322 (JP)**

(72) Inventors:
- **NITTA, Norzafriza**
  **Tokyo 100-8322 (JP)**
- **FUJIWARA, Hidemichi**
  **Tokyo 100-8322 (JP)**

(74) Representative: **advotec.**
**Patent- und Rechtsanwaltspartnerschaft**
**Tappe mbB**
**Widenmayerstraße 4**
**80538 München (DE)**

# (54) BONDING MATERIAL COMPOSITION, METHOD FOR MANUFACTURING BONDING MATERIAL COMPOSITION, BONDING FILM, METHOD FOR MANUFACTURING BONDED BODY, AND BONDED BODY

(57) A bonding material composition that can improve the shear strength, heat resistance, electrical conductivity, and heat dissipation properties of a bonding layer, a method for manufacturing a bonding material composition, a bonding film, a method for manufacturing a bonded body, and a bonded body are provided.

The bonding material composition according to the invention includes: metal particles (P) including first metal particles (P1) and second metal particles (P2); and a flux, in which the first metal particles (P1) are composed of a core (C1) made of Cu and a $Cu_2O$ layer covering the core (C1), and the second metal particles (P2) are composed of a core (C2) made of Cu, and Sn or Sn-containing solder covering the core (C2).

EP 4 484 051 A1

## Description

TECHNICAL FIELD

The present invention relates to a bonding material composition, a method for manufacturing a bonding material composition, a bonding film, a method for manufacturing a bonded body, and a bonded body, and more particularly, the invention relates to a bonding material composition for connecting a semiconductor element with a substrate such as a circuit substrate or a ceramic substrate, a bonding film, a method for manufacturing a bonded body using the bonding material composition or the bonding film, and a bonded body.

BACKGROUND ART

Semiconductor devices are generally manufactured by a step of forming a die mounting material for bonding a semiconductor element on an element support part of a lead frame or on a circuit electrode part of an insulating substrate, a step of mounting a semiconductor element on the surface of the die mounting material on the lead frame or on a circuit electrode and bonding the element support part of the lead frame or the circuit electrode part of the insulating substrate and the semiconductor element, a wire bonding step of electrically bonding an electrode part of the semiconductor element and a terminal part of the lead frame or a terminal part of the insulating substrate, and a molding step of coating a semiconductor device assembled in this manner with a resin.
Here, a bonding material is used when bonding the element support part of the lead frame or the circuit electrode part of the insulating substrate and the semiconductor element. For example, as a bonding material for power semiconductors such as IGBT and MOS-FET, lead solder containing 85% by mass or more of lead, which has a high melting point and is heat-resistant, has been widely used. However, in recent years, harmfulness of lead has been viewed as a problem, and there has been an increasing demand for lead-free bonding materials.
Furthermore, as compared with Si power semiconductors, SiC power semiconductors have features such as lower loss and the ability to operate at high speeds and high temperatures, and are therefore expected to be the next-generation power semiconductors. Such SiC power semiconductors are theoretically capable of operating at a temperature of 200°C or higher; however, for practicalizing high power output and high density of systems such as inverters, it is desirable to improve the heat resistance of peripheral materials, including bonding materials.
In light of these circumstances, in recent years, various lead-free type bonding materials having high melting points have been evaluated. Au-based alloys such as Au-Sn-based alloys and Au-Ge-based alloys have been disclosed as such lead-free type bonding materials having high melting points (for example, Patent Document 1), and these materials have attracted attention for exhibiting satisfactory electrical conduction and thermal conduction and being chemically stable. However, with regard to such Au-based alloy materials, the material cost is high because the alloy materials contain precious metals, and since highly expensive high-temperature vacuum reflow apparatuses are required in order to obtain better mounting reliability, the materials have not yet been put to practical use.
Thus, as a method for bonding a semiconductor element that operates at high temperatures, attention has been paid to a bonding method called Transient Liquid Phase Sintering method (TLP method) in which a bonding material containing Cu and Sn is interposed between a semiconductor element and a substrate and heated at a temperature higher than the melting point of Sn, and the bonding material is converted to an inter-metallic compound (IMC) having a composition of $Cu_6Sn_5$ or CusSn, and bonding methods and bonding films that use this bonding method have been disclosed (see, for example, Patent Documents 2 and 3).
Patent Document 2 discloses a bonding method in which a paste-like bonding agent containing Cu particles and Sn particles is interposed between a bonding surface of a semiconductor chip and a bonding surface of a substrate and heated to a temperature higher than the melting point of Sn, Cu and Sn are subjected to transient liquid phase sintering to modify the bonding agent to have a composition containing $Cu_6Sn_5$ and CusSn, the bonding agent is further heated in a temperature range of 232°C to 415°C to change $Cu_6Sn_5$ in the bonding agent to CusSn so as to increase the ratio of CusSn in the bonding agent, and a single phase of CusSn or an equilibrium structure of the CusSn phase and Cu particles is formed.
Patent Document 3 discloses a bonding film containing first metal particles and second metal particles that can form an intermetallic compound such as a Cu-Sn-based compound, a resin, and at least one of phosphines and sulfides.
Furthermore, as a bonding paste that does not utilize the transient liquid phase sintering method, there has been disclosed a bonding paste prepared by mixing a fine powder having an average particle size of 0.05 to 1 μm, with each particle being composed of a central core made of Cu and a coating layer that is made of $Cu_6Sn_5$ and covers the central core, with an organic solvent (see, for example, Patent Document 4). After this bonding paste is interposed between a first member and a second member to be bonded, in a nitrogen gas atmosphere or a formic acid gas atmosphere, a pressure of at least 0.1 MPa is applied such that the first and second members to be bonded closely adhere to each other, and the members are heated at a temperature of 250 to 400°C for 5 to 120 minutes. Thereby, it is considered that Cu particles

diffuse approximately uniformly inside the intermetallic compound of $Cu_6Sn_5$ to form a CusSn structure at a solidification start temperature of 676°C, and bonding with high initial bonding strength and high bonding strength during heating-cooling cycles can be realized.

CITATION LIST

PATENT DOCUMENT

Patent Document 1: JP 2006-032888 A
Patent Document 2: JP 6061248 B2
Patent Document 3: WO 2017/138255 A
Patent Document 4: JP 6753349 B2

SUMMARY OF THE INVENTION

PROBLEM TO BE SOLVED BY THE INVENTION

However, in the bonding method described in the above-described Patent Document 2, since it is difficult to remove the oxide formed on the surface of Cu particles, when the bonding agent is heated, molten liquid-phase Sn is less likely to wet the surface of Cu particles, and since unreacted Cu particles remain in the bonding layer, there is a problem with low shear strength and low heat dissipation properties. Furthermore, when molten Sn solidifies, Sn becomes bulky, and therefore, there is a problem that due to small elongation of the bonding layer, the power semiconductor shows decreased shear strength because of the high operation temperature and has low heat resistance. In addition, there is a problem that in order to change $Cu_6Sn_5$ into CusSn to increase the ratio of CusSn, heating is required in a second stage, which is time-consuming.

In the bonding method described in the above-described Patent Document 3, the oxides formed on the surface of the Cu particles are removed because at least one of phosphines and sulfides is included; however, since the Sn liquid phase is fluid, the Sn liquid phase is locally biased, and unreacted Cu particles still remain in the bonding layer, resulting in insufficient shear strength and heat dissipation properties.

In the bonding film described in the above-described Patent Document 4, since the $Cu_6Sn_5$ covering the central core made of Cu has a high melting point, micronized particles are used and sintered by a micronization effect and pressurization to form a bonding layer. Since the bonding layer is a sintered body, a large number of pores are present. This has led a problem with low electrical conductivity and heat dissipation properties, and a problem with low elongation and low heat resistance. Furthermore, since micronized particles are used, it is possible to apply the particles to thin films; however, it is expected that it will be difficult to form thick films.

Thus, it is an object of the invention to provide a bonding material composition that can improve the shear strength, heat resistance, electrical conductivity, and heat dissipation properties of a bonding layer, a method for manufacturing a bonding material composition, a bonding film, a method for manufacturing a bonded body, and a bonded body.

MEANS FOR SOLVING PROBLEM

In order to solve the above-described problems, a bonding material composition according to the invention comprises: metal particles (P) including first metal particles (P1) and second metal particles (P2); and a flux, wherein the first metal particles (P1) are composed of a core (C1) made of Cu and a $Cu_2O$ layer covering the core (C1), and the second metal particles (P2) are composed of a core (C2) made of Cu, and Sn or Sn-containing solder covering the core (C2).

In the bonding material composition, it is preferable that the first metal particles (P1) have an average particle size of 1 to 20 $\mu$m, and the second metal particles (P2) have an average particle size of 1 to 10 $\mu$m.

With regard to the above-described bonding material composition, it is preferable that a proportion of Sn in the Sn or the Sn-containing solder covering the core (C2) is 55% to 65% by mass with respect to a total amount of 100% by mass of the Cu of the core (C1) and the Cu of the core (C2).

With regard to the above-described bonding material composition, it is preferable that when a diffraction intensity of Cu (111) plane of the first metal particles (P1) as measured by X-ray diffraction is designated as H1, and a diffraction intensity of $Cu_2O$ (111) plane is designated as H2, a degree of oxidation H of the first metal particles (P1) represented by the following Formula 1 is 0.05 to 0.3:

$$H = H2/(H1 + H2) \qquad \text{[Formula 1]}$$

Furthermore, with regard to the above-described bonding material composition, it is preferable that the metal particles (P) further include third metal particles (P3), and the third metal particles (P3) are Sn particles or Sn-containing solder particles.

Furthermore, with regard to the above-described bonding material composition, it is preferable that a proportion of Sn in the Sn or the Sn-containing solder covering the core (C2), and a proportion of Sn in the Sn particles or Sn-containing solder particles is 55% to 65% by mass with respect to a total amount of 100% by mass of the Cu of the core (C1) and the Cu of the core (C2).

Furthermore, with regard to the above-described bonding material composition, it is preferable that the flux has reducing properties and does not include water in reaction products.

Furthermore, with regard to the above-described bonding material composition, it is preferable that the flux contains at least one of phosphines represented by the following General Formula (1) and sulfides represented by the following General Formula (2). However, R's in the following General Formulas (1) and (2) each independently represent an organic group, and R's may be identical with or different from each other.

[Chemical Formula 1]

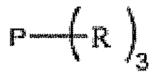 ···(1)

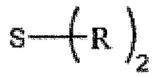 ···(2)

Furthermore, with regard to the above-described bonding material composition, it is preferable that a content proportion of the flux with respect to the metal particles (P) is 0.05% to 0.5% by mass.

Furthermore, with regard to the above-described bonding material composition, it is preferable that the content proportion of the metal particles (P) is 80% to 95% by mass with respect to a total amount of the bonding material composition.

Furthermore, it is preferable that the above-described bonding material composition forms a bonding layer that bonds a first member and a second member when heated at a temperature of 240°C or higher, and the bonding layer has a network structure in which Cu particles are bonded by compounds of Cu and Sn.

Furthermore, it is preferable that the above-described bonding material composition contains a thermosetting resin.

Furthermore, in order to solve the above problems, a method for manufacturing a bonding material composition according to the invention includes a step of mixing and stirring the first metal particles (P1) and the second metal particles (P2).

Furthermore, in order to solve the above problems, a bonding film according to the invention is a bonding film having a bonding material layer, and the bonding material layer is formed using any of the above-described bonding material compositions.

Furthermore, with regard to the above-described bonding film, it is preferable that the bonding material layer has a thickness of 10 to 100 μm.

Furthermore, in order to solve the above problems, a method for manufacturing a bonded body according to the invention is a method for manufacturing a bonding body, including bonding a first member and a second member by means of a bonding layer using any of the above-mentioned bonding material compositions, wherein the bonding material composition is interposed between the first member and the second member and heated at a temperature of 240°C or higher, whereby the flux removes the $Cu_2O$ layer of the first metal particles (P1), the Sn or the Sn-containing solder of the second metal particles (P2) melts and then reacts with the Cu of the core (C1) and the Cu of the core (C2), and the bonding layer having a network structure in which Cu particles are bonded by compounds of Cu and Sn is formed.

Furthermore, in order to solve the above problems, a method for manufacturing a bonded body according to the invention is a method for manufacturing a bonded body, including bonding a first member and a second member by means of a bonding layer using any of the above-mentioned bonding films, wherein the bonding material layer is interposed between the first member and the second member and heated at a temperature of 240°C or higher, whereby the flux removes the $Cu_2O$ layer of the first metal particles (P1), the Sn or the Sn-containing solder of the second metal particles (P2) melts and then reacts with the Cu of the core (C1) and the Cu of the core (C2), and the bonding layer having a network structure in which Cu particles are bonded by compounds of Cu and Sn is formed.

Furthermore, in order to solve the above problems, a bonded body according to the invention is a bonded body in which a first member and a second member are bonded by a bonding layer using any of the above-mentioned bonding material compositions, wherein the bonding layer is formed by heating the bonding material composition at a temperature of 240°C or higher.
Furthermore, in order to solve the above problems, a bonded body according to the invention is a bonded body in which a first member and a second member are bonded by a bonding layer using any of the above-mentioned bonding films, wherein the bonding layer is formed by heating the bonding material layer at a temperature of 240°C or higher.
With regard to the above-described bonded body, it is preferable that the bonding layer has a network structure in which Cu particles are bonded by compounds of Cu and Sn.
With regard to the above-described bonded body, it is preferable that the bonding layer has a thickness of 10 to 300 μm.

EFFECT OF THE INVENTION

According to the invention, a bonding material composition capable of improving the shear strength, heat resistance, electrical conductivity, and heat dissipation properties of a bonding layer, a method for manufacturing a bonding material composition, a bonding film, a method for manufacturing a bonded body, and a bonded body can be provided.

MODE(S) FOR CARRYING OUT THE INVENTION

Hereinafter, a bonding material composition according to embodiments of the invention will be described.
The bonding material composition according to an embodiment of the invention includes: metal particles (P) including first metal particles (P1) and second metal particles (P2); and a flux, in which the first metal particles (P1) are composed of a core (C1) made of Cu and a $Cu_2O$ layer covering the core (C1), and the second metal particles (P2) are composed of a core (C2) made of Cu, and Sn or Sn-containing solder covering the core (C2).
The bonding material composition of the invention can be used as a bonding paste for bonding of a semiconductor element and a substrate, or the like.
Furthermore, the bonding material composition of the invention can also be molded into a film form to be used as a bonding material layer of a bonding film having a bonding material layer.
Hereinafter, each constituent element of the bonding material composition of the present embodiment will be described in detail.

(First metal particles (P1))

The first metal particles (P1) are composed of a core (C1) made of Cu and a $Cu_2O$ layer covering the core (C1). The $Cu_2O$ layer can be formed by heating Cu particles in an oven or the like at 170 to 300°C for 30 minutes to 50 hours. The heating temperature and the heating time can be appropriately adjusted as long as the heating temperature and the heating time are in the ranges in which a $Cu_2O$ layer is formed.
The degree of oxidation H of the first metal particles (P1) is preferably 0.05 to 0.3, and more preferably 0.05 to 0.2. When the diffraction intensity of the Cu (111) plane of the first metal particles (P1) as measured by X-ray diffraction is designated as H1, and the diffraction intensity of the $Cu_2O$ (111) plane is designated as H2, the degree of oxidation H can be determined by the following Formula 1.

$$H = H2/(H1 + H2) \qquad \text{[Formula 1]}$$

According to X-ray diffraction using CuKα as an X-ray source, the (111) plane of copperoxide(I) ($Cu_2O$) has a peak at approximately 2θ = 36°, while on the other hand, the (111) plane of copper (Cu) has a peak at approximately 2θ = 43°. Incidentally, only copperoxide(I) ($Cu_2O$) exits as copper oxide, and copperoxide(II) (CuO) does not exist under the present conditions. As a result, when the peak height of the Cu (111) plane existing at approximately 2θ = 43° in the X-ray diffraction measurement is designated as H1, and the peak height of the $Cu_2O$ (111) plane existing at approximately 2θ = 36° is designated as H2, the degree of oxidation H can be determined from the X-ray diffraction peak intensity ratio (H2/[H1 + H2]).
When the degree of oxidation H is less than 0.05, the reaction between the Cu of the core (C1) of the first metal particles (P1) and the Sn or Sn-containing solder of the second metal particles (P2) partially occurs, and it is difficult to obtain a uniform structure over the entire bonding layer. When the degree of oxidation H is greater than 0.3, the oxide film becomes too thick, removal of the oxide film by the flux is not sufficiently achieved, there is a risk that the reaction between

Cu of the core (C1) of the first metal particles (P1) and Sn or Sn-containing solder of the second metal particles (P2) may be achieved insufficiently, and as a result, there is a risk that the shear strength, heat resistance, and heat dissipation properties of the bonding layer may be deteriorated. In addition, when the degree of oxidation H is greater than 0.5, removal of the oxide film by the flux will not be completed in time, and there is a risk that the electrical conductivity of the bonding layer may also be decreased.

The degree of oxidation H can be adjusted by adjusting the heating temperature and the heating time for the core (C1).

The average particle size of the first metal particles (P1) is preferably 1 to 20 μm, and more preferably 5 to 8 μm. When the average particle size of the first metal particles (P1) is less than 1 μm, the metal particles are likely to aggregate, the catalytic effect becomes too strong, there is a risk that the dispersibility with a thermosetting resin may decrease, and as a result, there is a risk that the shear strength, heat resistance, electrical conductivity, and heat dissipation properties of the bonding layer may be deteriorated. When the average particle size of the first metal particles (P1) is greater than 20 μm, at the time of heating the bonding material composition at a temperature of 240°C or higher, Cu of the core (C1) of the first metal particles (P1) are less likely to react uniformly with Sn of the second metal particles (P2), a bonding layer with a uniform structure is not obtained, and there is a risk that the shear strength and heat dissipation properties of the bonding layer may be poor. Furthermore, there is a risk that the bonding layer may become too thick, and reliability may decrease. In addition, when the average particle size of the first metal particles (P1) is greater than 25 μm, there is a risk that wettability of solder may be deteriorate, and the electrical conductivity may decrease.

Furthermore, in a case where the bonding material composition is molded into a film shape to form a bonding material layer of a bonding film, the average particle size of the first metal particles (P1) is preferably 1 to 10 μm. When the average particle size of the first metal particles (P1) is greater than 10 μm, since the thickness of the bonding material layer becomes too large, handling as film is difficult, and mass productivity deteriorates.

The average particle size of each particle in the invention is determined by the median size (particle size at which the cumulative frequency is 50%: D50). Specifically, the average particle size is determined by measuring a particle group extracted and separated from a raw material powder or paste, using a laser diffraction/scattering type particle size distribution analyzer.

(Second metal particles (P2))

The second metal particles (P2) are composed of a core (C2) made of Cu, and Sn or Sn-containing solder covering the core (C2). The term covering as used herein means that a half or more of the surface area of the core (C2) may be covered. The second metal particles (P2) can be obtained by covering the core (C2) with Sn or Sn-containing solder by an electroless plating method. The Sn-containing solder is lead-free solder, and tin (Sn)-nickel (Ni)-copper (Cu)-based, tin (Sn)-silver (Ag)-copper (Cu)-based, tin (Sn)-zinc (Zn)-bismuth (Bi)-based, tin (Sn)-copper (Cu)-based, tin (Sn)-silver (Ag)-indium (In)-bismuth (Bi)-based, or tin (Sn)-zinc (Zn)-aluminum (Al)-based solder, or the like can be used.

The average particle size of the second metal particles (P2) is preferably 1 to 10 μm, more preferably 1 to 5 μm, and even more preferably 1.5 to 3 μm. Furthermore, in order to avoid the residual Sn, which has low heat resistance, and to densely pack the second metal particles (P2), it is also preferable that the average particles of the second metal particles (P2) are smaller than the average particle size of the first metal particles (P1).

By adjusting the average particle size of the second metal particles (P2) to 1 μm or more, voids are likely to be formed between CusSn formed by a wet-spreading and reacting of Sn with the surface of the Cu particles of the first metal particles (P1) and CusSn particles formed by reacting of Sn with the Cu particles of the core (C2) of the second metal particles (P2) inside the bonding layer formed by heating the bonding material composition at a temperature of 240°C or higher. Therefore, elongation of the bonding layer increases, and even at the high operation temperatures of power semiconductors, the shear strength is not decreased, while the heat resistance is improved.

By adjusting the average particle size of the second metal particles (P2) to 10 μm or less, when the bonding material composition is heated to a temperature of 240°C or higher, the second metal particles (P2) infiltrate between the first metal particles (P1), the reaction proceeds uniformly, a bonding layer with a uniform structure is obtained, and therefore, the shear strength and heat dissipation properties of the bonding layer are improved.

When the average particle size of the second metal particles (P2) is less than 1 μm, the melting rate of the Sn or Sn-containing solder covering the core (C2) becomes faster than the reduction rate of $Cu_2O$ of the first metal particles (P 1), and the surface of the Sn or Sn-containing solder covering the core (C2) is also easily oxidized, so that there is a risk that wettability of solder may become poor. As a result, there is a risk that all of the shear strength, heat resistance, electrical conductivity, and heat dissipation properties of the bonding layer may deteriorate. When the average particle size of the second metal particles (P2) is greater than 10 μm, at the time of heating the bonding material composition at a temperature of 240°C or higher, the second metal particles (P2) are less likely to react uniformly with Cu of the first metal particles (P1), a bonding layer with a uniform structure is not obtained, and there is a risk that the shear strength and heat dissipation properties of the bonding layer may be poor. In addition, when the average particle size of the second metal particles (P2) is

greater than 12 μm, wettability of the solder becomes poor, and there is a risk that the electrical conductivity of the bonding layer may deteriorate.

With regard to the bonding material composition, it is preferable that the proportion of Sn in the Sn or the Sn-containing solder covering the core (C2) is 55% to 65% by mass with respect to a total amount of 100% by mass of Cu of the core (C1) and Cu of the core (C2). When the proportion of Sn is less than 55% by mass, at the time of heating the bonding material composition at a temperature of 240°C or higher, Sn is used in the reaction with Cu of the core (C2) and is less likely to react with Cu of the core (C1) of the first metal particles (P1). Therefore, a bonding layer with a uniform structure is not obtained, and there is a risk that the shear strength and heat dissipation properties of the bonding layer may be poor. Furthermore, compounds of Cu and Sn cannot be sufficiently formed, and there is a risk that the heat resistance and electrical conductivity of the bonding layer may deteriorate. When the proportion of Sn is more than 65% by mass, most of the Cu of the core (C1) of the first metal particles (P1) forms CusSn, the amount of Cu is reduced, and therefore, the heat dissipation properties become poor. Furthermore, when the proportion of Sn is more than 65% by mass, molten Sn does not react with Cu but solidifies and becomes bulky, filling the gaps between the first metal particles (P1) and the second metal particles (P2), and therefore, there is a risk that the elongation of the bonding layer may be reduced while the heat resistance may become poor.

(Third metal particles (P3))

With regard to the bonding material composition, when the proportion of Sn in the Sn or the Sn-containing solder covering the core (C2) is less than 55% by mass with respect to a total amount of 100% by mass of Cu of the core (C1) and Cu of the core (C2), the metal particles (P) may contain Sn particles or Sn-containing solder particles as third metal particles (P3) to the extent that the total proportion of Sn does not exceed 65% by mass. That is, with regard to the bonding material composition, it is preferable that the proportion of Sn in the Sn or Sn-containing solder covering the core (C2), and Sn in the Sn particles or Sn-containing solder particles is 55% to 65% by mass with respect to a total amount of 100% by mass of Cu of the core (C1) and Cu of the core (C2). The Sn-containing solder particles are lead-free solder particles, and tin (Sn)-nickel (Ni)-copper (Cu)-based, tin (Sn)-silver (Ag)-copper (Cu)-based, tin (Sn)-zinc (Zn)-bismuth (Bi)-based, tin (Sn)-copper (Cu)-based, tin (Sn)-silver (Ag)-indium (In)-bismuth (Bi)-based, or tin (Sn)-zinc (Zn)-aluminum (Al)-based solder, or the like can be used.

(Flux)

The bonding material composition includes a flux. The flux is not particularly limited, and any flux that is generally used for solder bonding or the like can be used.

Examples of the flux include zinc chloride, a mixture of zinc chloride and an inorganic halide, a mixture of zinc chloride and an inorganic acid, a molten salt, phosphoric acid, a derivative of phosphoric acid, an organic halide, hydrazine, an amine compound, an organic acid, and pine resin. Regarding the flux, only one kind thereof may be used, or two or more kinds thereof may be used in combination.

Examples of the molten salt include ammonium chloride. Examples of the organic acid include lactic acid, citric acid, stearic acid, glutamic acid, and glutaric acid. Examples of the pine resin include activated pine resin and non-activated pine resin. The flux may be an organic acid having a carboxyl group, or may be pine resin.

Examples of the organic acid having a carboxyl group include glutaric acid, adipic acid, pimelic acid, suberic acid, azelaic acid, sebacic acid, undecanedioic acid, dodecanedioic acid, tridecanedioic acid, tetradecanedioic acid, pentadecanedioic acid, octadecanedioic acid, nonadecanedioic acid, and eicosanedioic acid. Among them, adipic acid, suberic acid, sebacic acid, and dodecanedioic acid are preferred, and examples include sebacic acid.

The pine resin is rosins containing abietic acid as a main component. Examples of the rosins include abietic acid and acrylic-modified rosin.

Examples of the amine compound include cyclohexylamine, dicyclohexylamine, benzylamine, benzhydrylamine, imidazole, benzimidazole, phenylimidazole, carboxybenzimidazole, benzotriazole, and carboxybenzotriazole.

Furthermore, the flux according to the invention also includes a compound having a function as a flux for removing an oxide film on a metal surface, that is, reducing properties. Examples of such a compound include a compound containing one or more phosphorus or sulfur atoms in the molecular structure. Examples of the compound containing one or more phosphorus or sulfur atoms in the molecular structure include an organic phosphorus compound and an organic sulfur compound.

The compound containing one or more phosphorus or sulfur atoms in the molecular structure can bind to an oxygen atom without including water in the reaction products, that is, without generating water, and remove oxygen atoms from a metal oxide. Generally, products having large latent heat of vaporization, such as water, cause violent bumping when heated and induce the formation of voids in the structure. Therefore, the formation of voids can be prevented by using a flux that does not include water in the reaction products.

Furthermore, since the compound containing one or more phosphorus or sulfur atoms in the molecular structure is less likely to absorb moisture and is less likely to bleed out, it is not necessary to perform flux cleaning after reflow, as is the case with general fluxes such as carboxylic acids.

The organic phosphorus compound is preferably at least one selected from phosphines and phosphites. As the phosphines, for example, triphenylphosphine, tris(4-methylphenyl)phosphine, methyldiphenylphosphine, diethylphenylphosphine, cyclohexyldiphenylphosphine, 4-(diphenylphosphino)styrene, methylenebis(diphenylphosphine), ethylenebis(diphenylphosphine), trimethylenebis(diphenylphosphine), and tetramethylenebis(diphenylphosphine) can be used. Furthermore, as the phosphites, for example, trimethyl phosphite, triethyl phosphite, triisopropyl phosphite, tributyl phosphite, trioctyl phosphite, tris(2-ethylhexyl) phosphite, triisodecyl phosphite, trioleyl phosphite, triphenyl phosphite, trip-tolyl phosphite, tris(2,4-di-tert-butylphenyl) phosphite, tristearyl phosphite, tris(nonylphenyl) phosphite, and trilauryl trithiophosphite can be used.

The organic sulfur compound is preferably at least one selected from sulfides, disulfides, trisulfides, and sulfoxides. As the sulfides, for example, bis(4-methacryloylthiophenyl) sulfide, bis(4-hydroxyphenyl) sulfide, bis(4-aminophenyl) sulfide, 2-methylthiophenothiazine, diallyl sulfide, ethyl 2-hydroxyethyl sulfide, diamyl sulfide, hexyl sulfide, dihexyl sulfide, n-octyl sulfide, phenyl sulfide, 4-(phenylthiol)toluene, phenyl p-tolyl sulfide, 4-tert-butyldiphenyl sulfide, di-tert-butyl sulfide, diphenylene sulfide, furfuryl sulfide, and bis(2-mercaptoethyl) sulfide can be used. Furthermore, as the disulfides, for example, diethyl disulfide, dipropyl disulfide, dibutyl disulfide, amyl disulfide, heptyl disulfide, cyclohexyl disulfide, bis(4-hydroxyphenyl) disulfide, bis(3-hydroxyphenyl) disulfide, diphenyl disulfide, and benzyl disulfide can be used. As the trisulfides, for example, dimethyl trisulfide and diisopropyl trisulfide can be used. As the sulfoxides, dimethyl sulfoxide, dibutyl sulfoxide, di-n-octyl sulfoxide, methylphenyl sulfoxide, diphenyl sulfoxide, dibenzyl sulfoxide, and p-tolyl sulfoxide can be used.

Particularly, it is preferable that the flux includes at least one of phosphines represented by the following General Formula (1) and sulfides represented by the following General Formula (2). However, R's in the following General Formulas (1) and (2) each independently represent an organic group, and R's may be identical with or different from each other.

[Chemical Formula 2]

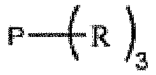 ···(1)

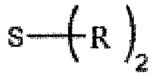 ···(2)

In the above-described General Formulas (1) and (2), it is preferable that R's are each independently any one selected from an alkyl group, an aryl group, an organic group having a functional group, an organic group having a heteroatom, and an organic group having an unsaturated bond, and at least one of R's is preferably an aryl group.

The alkyl group may be any of a linear group, a branched group, and a cyclic group, and may have a substituent. It is preferable that the alkyl group is linear or branched. Furthermore, the above-described alkyl group preferably has 3 or more carbon atoms, more preferably 4 to 18 carbon atoms, and even more preferably 6 to 15 carbon atoms. Specific examples of such an alkyl group include a propyl group, a butyl group, a pentyl group, a hexyl group, a heptyl group, an octyl group, a nonyl group, a decyl group, a stearyl group, and an isostearyl group.

The above-described aryl group may have a substituent, and preferably has 6 to 10 carbon atoms. Examples of such an aryl group include a phenyl group, a tolyl group, a xylyl group, a cumenyl group, and a 1-naphthyl group.

The above-described organic group having a functional group preferably has 1 to 10 carbon atoms, more preferably 1 to 6 carbon atoms, and even more preferably 1 to 3 carbon atoms. Furthermore, examples of the functional group carried by the above-described organic group include a chloro group, a bromo group, and a fluoro group. Specific examples of such an organic group having a functional group include a chloroethyl group, a fluoroethyl group, a chloropropyl group, a dichloropropyl group, a fluoropropyl group, a difluoropropyl group, a chlorophenyl group, and a fluorophenyl group.

The above-described organic group having a heteroatom preferably has 3 or more carbon atoms, more preferably 4 to 18 carbon atoms, and even more preferably 6 to 15 carbon atoms. Furthermore, examples of the heteroatom carried by the above-described organic group include a nitrogen atom, an oxygen atom, and a sulfur atom. Specific examples of such an organic group having a heteroatom include a dimethylamino group, a diethylamino group, a diphenylamino group, a methyl sulfoxide group, an ethyl sulfoxide group, and a phenyl sulfoxide group.

The above-described organic group having an unsaturated bond preferably has 3 or more carbon atoms, more

preferably 4 to 18 carbon atoms, and even more preferably 6 to 15 carbon atoms. Specific examples of such an organic group having an unsaturated bond include a propenyl group, a propynyl group, a butenyl group, a butynyl group, an oleyl group, a phenyl group, a vinylphenyl group, and an alkylphenyl group. Among them, it is more preferable that the compound has a vinylphenyl group.

Furthermore, in the above-described General Formulas (1) and (2), it is preferable that R's each independently have, as a part thereof, any one or more selected from a vinyl group, an acryl group, a methacryl group, a maleic acid ester group, a maleic acid amide group, a maleic acid imide group, a primary amino group, a secondary amino group, a thiol group, a hydrosilyl group, a hydroboron group, a phenolic hydroxyl group, and an epoxy group. Among them, it is more preferable that the compound has a vinyl group, an acrylic group, a methacrylic group, or a secondary amino group. Specifically, it is preferable that the phosphines includes p-styryldiphenylphosphine. Such compounds are suitable from the viewpoint of having a highly reactive vinyl group and therefore having low bleed-out properties.

Furthermore, it is preferable that the sulfides includes at least one of bis(hydroxyphenyl) sulfide, bis(acryloylthiophenyl) sulfide, 2-methylthiophenothiazine, bis(2-methacryloylthioethyl) sulfide, and bis(methacryloylthiophenyl) sulfide, and it is more preferable that the sulfide includes at least one of bis(acryloylthiophenyl) sulfide and bis(methacryloylthiophenyl) sulfide. These compounds are suitable from the viewpoint of having a highly reactive phenolic hydroxyl group, acrylic group, or methacrylic group, and therefore having low bleed-out properties, and among them, compounds having an acrylic group or a methacrylic group are most suitable.

Furthermore, the phosphines and the sulfides may be each used alone, or both of them may be used in combination.

Furthermore, when the thermosetting resin that will be described below includes a maleimide resin, such a phosphines and a sulfides can form a copolymer with a maleimide resin and therefore also act as a thermosetting resin component. Furthermore, since phosphines and sulfides are less likely to absorb moisture, have a sufficiently large molecular weight, and are polymerizable, phosphines and sulfides can effectively prevent bleeding out when used as flux components. Therefore, by using such phosphines or sulfides instead of an alcohol or a carboxylic acid, which easily absorbs moisture, the risk of bleeding out can be reduced without going through flux washing, and sufficient reliability, particularly reflow resistance after moisture absorption, can be secured.

With regard to the bonding material composition, it is preferable that the content proportion of the flux with respect to the metal particles (P) is 0.05% to 0.5% by mass. When the content proportion of the flux is less than 0.05% by mass, the $Cu_2O$ layer of the first metal particles (P1) cannot be sufficiently removed, and the wettability of Sn and the reactivity of Sn with Cu of the core (C1) of the first metal particles (P1) are deteriorated. On the other hand, when the content proportion of the flux is more than 0.5% by mass, residual flux remains and inhibits the reaction of Sn with Cu of the core (C1) of the first metal particles (P1), and results with deteriorated heat resistance, heat dissipation properties, and electrical conductivity are expected. Furthermore, depending on the type of the flux, residual flux may absorb moisture or bleed out, thereby adversely affecting the device, or may promote the diffusion reaction between Cu and Sn more than necessary, causing diffusion voids to grow. Thus, there is a risk that the strength and elongation of the bonding material may be deteriorated, and reliability may be decreased.

In order to adjust the content proportion of the flux to 0.05% to 0.5% by mass with respect to the metal particles (P), the surfaces of the first metal particles (P1) may be modified with the flux, or a trace amount of the flux may be added to the bonding material composition.

In order to modify the surfaces of the first metal particles (P1) with the flux, the first metal particles (P1) were immersed in a flux solution, and the flux was coordinated to the surfaces of the first metal particles (P1) using an ultrasonic device. When such a method is used, it is not necessary to add the flux in an excessive amount that is more than the amount of the flux added to the bonding material composition, it is possible to minimize the inhibition of reactions caused by residual flux and the influence of flux components on the device, and an improvement in reliability can be expected.

The content of the flux in the case of modifying the surfaces of the first metal particles (P1) with the flux, can be adjusted by the power output of the ultrasonic device and the stirring time. Furthermore, when the surfaces of the first metal particles (P1) are modified with the flux, the flux content can be specified using Fourier transform infrared spectroscopy (FT-IR) measurement.

(Thermosetting resin)

When the bonding material composition is molded into a film shape and used as a bonding material layer of a bonding film, the bonding material composition contains a thermosetting resin; however, when the bonding material composition is used as a bonding paste, it is preferable that the bonding material composition does not contain a thermosetting resin. When the bonding material composition contains a thermosetting resin, in a case where the bonding material composition is molded into a film shape and used as a bonding material layer of a bonding film, the film-forming properties and handleability are improved. Furthermore, close adhesion to a semiconductor element, a lead frame, or the like is improved at the time of bonding.

In addition, in the bonding layer formed by heating the bonding material composition, the bonding material composition accomplishes the role of relieving the stress generated between a semiconductor element and a lead frame or the like due to thermal cycles. For this reason, when the viscosity of the flux is low, it is particularly preferable that the bonding material composition contains a thermosetting resin.

Particularly, from the viewpoints of heat resistance, and the film-forming properties when metal particles (P) are incorporated, it is preferable that the thermosetting resin includes a maleic acid imide resin including a maleic acid imide compound containing two or more units of imide groups in one molecule (hereinafter, may be referred to as "maleimide resin") or an epoxy resin having a molecular skeleton derived from a glycidyl ether of an aliphatic diol, and it is more preferable that the thermosetting resin includes a maleic acid imide resin. Particularly, since a thermosetting resin containing any of the above-described resins has excellent stress relaxation properties, heat resistance of a bonding layer formed by heating the bonding material composition is improved.

The maleic acid imide resin is obtained by, for example, condensing maleic acid or anhydride thereof with a diamine or a polyamine, or the like. Furthermore, it is preferable from the viewpoint of the stress relaxation properties that the maleic acid imide resin includes a skeleton derived from an aliphatic amine having 10 or more carbon atoms, and particularly, it is more preferable that the maleic acid imide resin has 30 or more carbon atoms and has a skeleton represented by the following Structural Formula (3). Furthermore, it is preferable that the maleic acid imide compound has a number average molecular weight of 3000 or more.

[Chemical Formula 3]

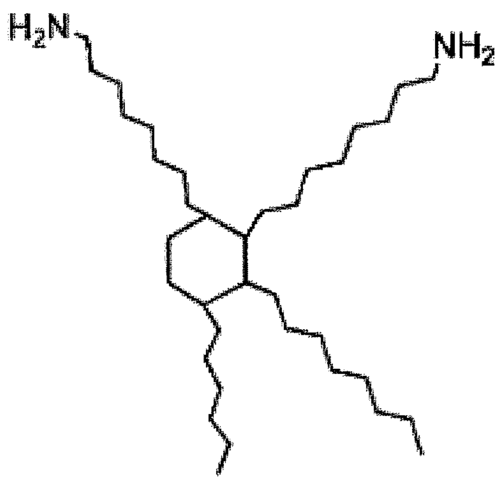

· · · (3)

With regard to the maleic acid imide resin, the molecular weight, the glass transition temperature Tg, and the like may be adjusted by allowing the resin to contain a skeleton derived from an acid component other than maleic acid, for example, benzene tetracarboxylic acid or anhydride thereof, hydroxyphthalic acid bisether or anhydride thereof, or the like. Furthermore, as a curing agent for the maleic acid imide resin, a phenol novolac resin, a radical generator, and the like are preferable.

Furthermore, as such a maleic acid imide resin, for example, bismaleimide resins represented by the following Structural Formulas (4) to (6) and the like are suitably used.

[Chemical Formula 4]

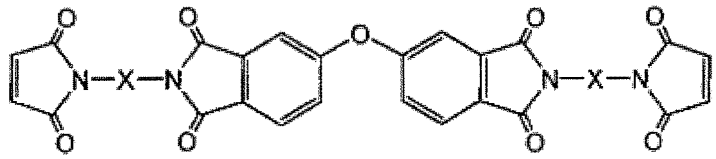

· · · (4)

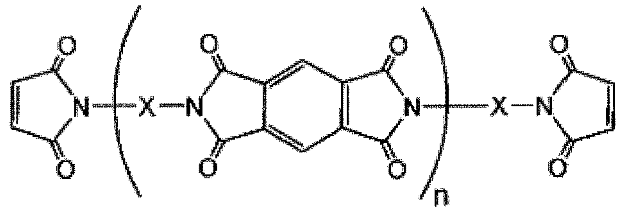

· · · (5)

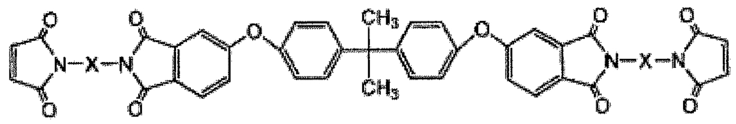

· · · (6)

In the above-described Formula (5), n is an integer of 1 to 10. Furthermore, in the above-described Formulas (4) to (6), the moiety "X" is the skeleton of "$C_{36}H_{72}$" represented by the following Structural Formula (7). In the following Formula (7), the symbol "*" means a bonding site with N.

[Chemical Formula 5]

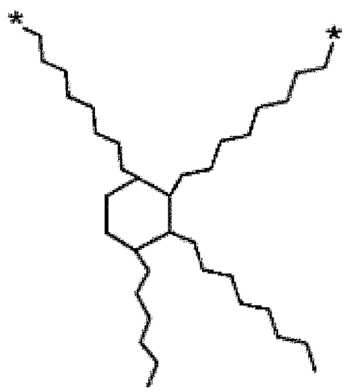

· · · (7)

Furthermore, examples of the epoxy resin having a molecular skeleton derived from a glycidyl ether of an aliphatic diol include an ethylene glycol-modified epoxy resin, a propylene glycol-modified epoxy resin, and a butanediol-modified epoxy resin. These epoxy resins are preferable from the viewpoint of flexibility. Furthermore, it is more preferable to mix such an epoxy resin with a bisphenol A type epoxy resin, a bisphenol F type epoxy resin, a phenoxy resin, which is an epoxy resin having a large molecular weight, or the like and use the mixture, from the viewpoint of achieving both adhesive strength and flexibility.

Furthermore, as the curing agent for an epoxy resin such as described above, an acid anhydride, a phenol novolac resin, an amine, an imidazole-based compound, dicyandiamide, or the like can be selected. Among them, a phenol novolac resin and an imidazole-based compound are preferred.

It is preferable that the thermosetting resin further includes a phenol novolac resin. For example, by using the above-described maleic acid imide resin or an epoxy resin and a phenol novolac resin in combination, the phenol novolac resin acts as a curing agent, and the adhesiveness of the thermosetting resin is further improved.

The content of the thermosetting resin in the bonding material composition according to the present embodiment is preferably 4% to 30% by mass, and more preferably 6% to 20% by mass. When the content of the thermosetting resin is adjusted to 4% by mass or more, close adhesion to a semiconductor element, a lead frame, or the like at the time of bonding

is improved. Furthermore, a bonding layer formed by heating the bonding material composition also has excellent properties of relaxing the stress occurring between a semiconductor element and a lead frame or the like due to thermal cycles. When the content of the thermosetting resin is more than 30% by mass, there is a risk that the heat dissipation properties may deteriorate.

When a bonding material layer of a bonding film is formed using the bonding material composition, from the viewpoint of the balance between the film-forming properties as well as handleability and the heat dissipation properties, the content of the thermosetting resin in the bonding material composition is preferably 6% to 9% by mass.

The thermosetting resin may be composed of only one kind of resin, or may be a mixture of two or more kinds of resins. Furthermore, the thermosetting resin may further contain a resin other than those described above, as necessary.

With regard to the bonding material composition, it is preferable that the content proportion of the metal particles (P) is 80% to 95% by mass with respect to the total amount of the bonding material composition. When the content proportion of the metal particles (P) is less than 80% by mass, the release properties deteriorate. When the content proportion of the metal particles (P) is more than 95% by mass, the content of the flux or the thermosetting resin becomes smaller, and therefore, the wettability of Sn, the reactivity between Cu of the first metal particles (P1) and Sn, close adhesion to a semiconductor element, a lead frame, or the like at the time of bonding, the stress relaxation properties after bonding, and the like are deteriorated.

The bonding material composition according to the present embodiment may include various additives in addition to the above-described components, to the extent that the object of the invention is maintained. Such additives can be appropriately selected as necessary, but examples thereof include a dispersant, a radical polymerization initiator, a leveling agent, and a plasticizer.

Next, a method for manufacturing a bonding material composition will be described. The method for manufacturing a bonding material composition is not particularly limited. The bonding material composition can be obtained by mixing the above-mentioned components constituting the bonding material composition, and further subjecting the mixture to treatments such as stirring and dispersing. It is preferable that the surface of the first metal particles (P1) is modified in advance with the flux by the above-mentioned method. The apparatuses for these mixing, stirring, dispersing, and the like are not particularly limited, and a three-roll mill, a planetary mixer, a planetary mixer, a rotation-revolution type stirring apparatus, a Raikai mixer, a twin-screw kneader, a thin layer shear disperser, and the like can be used.

Next, a bonding film according to the invention will be described. The bonding film has at least a bonding material layer for bonding a semiconductor element, a lead frame, and the like, and this bonding material layer is formed using the above-mentioned bonding material composition. From the viewpoint of improving the film-forming properties, the bonding material composition may further contain a solvent.

Regarding a method for forming a bonding material layer, first, a bonding material composition is formed into a film shape. The method for forming a bonding material composition into a film shape is not particularly limited, and any conventional method can be used. Inkjet printing, screen printing, a jet printing method, a dispenser, a jet dispenser, a comma coater, a slit coater, a die coater, a gravure coater, slit coating, letterpress printing, intaglio printing, gravure printing, stencil printing, bar coating, an applicator, a spray coater, electrodeposition coating, and the like can be used.

The bonding material layer is obtained by drying the solvent of the bonding material composition molded into a film shape. Regarding the drying method, drying by leaving at normal temperature, drying by heating, or drying under reduced pressure can be used. For the drying by heating or drying under reduced pressure, a hot plate, a hot air dryer, a hot air heating furnace, a nitrogen dryer, an infrared dryer, an infrared heating furnace, a far-infrared heating furnace, a microwave heating device, a laser heating device, an electromagnetic heating device, a heater heating device, a steam heating furnace, a hot plate pressing device, and the like can be used. It is preferable that the temperature and time for drying are appropriately adjusted in accordance with the type and amount of the dispersing medium used, and for example, it is preferable to dry at 50 to 180°C for 1 to 120 minutes.

After the bonding material layer is formed into a film shape on a molding base material, the bonding material layer may be peeled off. The molding base material is not particularly limited; however, for example, polyethylene terephthalate, polytetrafluoroethylene, polyimide, PEEK, aluminum, glass, alumina, silicon nitride, and stainless steel can be used. Furthermore, a substrate that is heat-resistant or a cloth that is coated or impregnated with the above-described material may be used as the molding base material.

The bonding film may have a release film stuck to the surface of the bonding material layer until the bonding material layer is used, in order to protect the surface of the bonding material layer.

It is preferable that the bonding material layer has a thickness of 10 to 100 μm.

Next, a method for using the above-mentioned bonding material composition and bonding material layer, that is, a method for manufacturing a bonded body, will be described.

Examples of a bonded body include a semiconductor device and an electronic component. Specific examples of the semiconductor device include a power module, a transmitter, an amplifier, and an LED module equipped with a diode, a rectifier, a thyristor, a metal oxide semiconductor (MOS) gate driver, a power switch, a power metal oxide semiconductor field-effect transistor (MOSFET), an insulated gate bipolar transistor (IGBT), a Schottky diode, and a first recovery diode.

First, the above-mentioned bonding material composition or bonding material layer is interposed between the first member and the second member. That is, the first member and the second member are stuck together, with the bonding material composition or the bonding material layer interposed therebetween, by bringing the site of the first member to be bonded to the second member, into contact with the site of the second member to be bonded to the first member. Here, the first member is not particularly limited, but examples thereof include a lead frame, a wired tape carrier, a rigid wiring board, a flexible wiring board, a wired glass substrate, a wired silicon wafer, and a support member for a rewiring layer and the like employed in a wafer level chip size package (CSP). The second member is not particularly limited, and examples thereof include active elements such as a transistor, a diode, a light-emitting diode, and a thyristor; and passive elements such as a capacitor, a resistor, a resistor array, a coil, and a switch. However, the bonding material composition according to the invention is suitably used for semiconductor elements that operate at high temperatures, particularly power semiconductors.

Next, the bonding material composition or the bonding material layer is heated at a temperature of 240°C or higher in an inert atmosphere of nitrogen or the like to form a bonding layer that bonds the first member and the second member. The upper limit of the heating temperature is not particularly limited, but is, for example, 300°C or lower. The heating time is preferably 60 to 120 minutes, more preferably 30 to 90 minutes, and even more preferably 5 to 60 minutes.

For the heating treatment, a hot plate, a hot air dryer, a hot air heating furnace, a nitrogen dryer, an infrared dryer, an infrared heating furnace, a far-infrared heating furnace, a microwave heating device, a laser heating device, an electromagnetic heating device, a heater heating device, a steam heating furnace, and the like can be used. Furthermore, for the heating and pressurization treatment, a hot plate pressing device, or the like may be used, or the above-mentioned heating treatment may be carried out while applying pressure.

When the bonding material composition or the bonding material layer is heated, first, the flux starts to remove the $Cu_2O$ layer covering Cu of the core (C1) of the first metal particles (P1). When the melting point of Sn is reached, the Sn or Sn-containing solder covering Cu of the core (C2) of the second metal particles (P2) melts and wet-spreads over the surface of the Cu of the core (C2) and the Cu of the core (C1) of the first metal particles (P1). Then, Sn reacts with Cu of the core (C2), and $Cu_6Sn_5$, which is an intermediate Cu-Sn compound, is formed. Furthermore, Sn reacts with Cu on the surface of the core (C1), and $Cu_6Sn_5$, which is an intermediate Cu-Sn compound, is formed. In addition, by continuing heating, CusSn is formed because Cu is supplied to $Cu_6Sn_5$, and a bonding layer is formed. It is preferable that the bonding layer has a thickness of 10 to 300 μm.

In this manner, a bonded body in which a first member and a second member are bonded by a bonding layer is manufactured.

Here, the Cu of the core (C1) is covered by a $Cu_2O$ layer, so that when heated, the flux removes the $Cu_2O$ layer while Sn melts at the same time, and therefore, the Cu of the core (C2) starts to react first with Sn. Since CusSn is definitely formed inside the second metal particles (P2), a significant number of the second metal particles (P2) become CusSn particles; however, Cu may remain inside some of the particles.

Furthermore, the Cu of the core (C1) is covered by a $Cu_2O$ layer, so that when heated, the flux removes the $Cu_2O$ layer while Sn melts at the same time, and therefore, molten Sn uniformly spreads around the first metal particles (P1). When the $Cu_2O$ layer is removed, Sn reacts with the Cu of the core (C1), and therefore, CusSn is formed uniformly on the surface of the core (C1). It is preferable that the first metal particles (P1) have a larger average particle size than the second metal particles (P2), and since the reaction between Sn and Cu of the core (C1) begins later than the reaction inside the second metal particles (P2), Cu remains inside the core (C1).

As a result, the bonding layer formed by heating the bonding material composition or the bonding material layer, has a network structure in which Cu particles are bonded by compounds of Cu and Sn. For this reason, the obtained bonding layer has extremely high shear strength, heat resistance, electrical conductivity, and heat dissipation properties.

## EXAMPLES

Next, Examples of the invention will be described; however, the invention is not intended to be limited to these Examples.

<Raw materials>

[First metal particles (P1)]

(P1)A: Cu particles (MA Series, manufactured by MITSUI MINING & SMELTING CO., LTD.) were heated at 200°C for 1 hour in an oven, and metal particles in which Cu particles were covered with a $Cu_2O$ layer were obtained. The average particle size (D50) was 5 μm, and the degree of oxidation H was 0.05. The degree of oxidation H was determined from $H = H2/(H1 + H2)$ by measuring the diffraction intensity H1 of the Cu (111) plane and the diffraction intensity H2 of the $Cu_2O$ (111) plane using an X-ray diffraction apparatus (X' PertPRO (trade name), manufactured by Malvern Panalytical,

Ltd.). The average particle size (D50) of the metal particles was measured using a laser diffractometer (SALD-3100 (trade name), manufactured by SHIMADZU CORPORATION).

(P1)B: Cu particles (MA Series, manufactured by MITSUI MINING & SMELTING CO., LTD.) were heated at 180°C for 3 hours in an oven, and metal particles in which Cu particles are covered with a $Cu_2O$ layer were obtained. The average particle size (D50) was 5 μm, and the degree of oxidation H was 0.3. The degree of oxidation H and the average particle size (D50) were measured in the same manner as in the case of (P1)A.

(P1)C: Cu particles (MA Series, manufactured by MITSUI MINING & SMELTING CO., LTD.) were heated at 300°C for 40 minutes in an oven, and metal particles in which Cu particles are covered with a Cu2O layer were obtained. The average particle size (D50) was 5 μm, and the degree of oxidation H was 0.5. The degree of oxidation H and the average particle size (D50) were measured in the same manner as in the case of (P1)A.

(P1)D: Cu particles (MA Series, manufactured by MITSUI MINING & SMELTING CO., LTD.) were used. The average particle size (D50) was 5 μm, and the degree of oxidation H was 0. The average particle size (D50) was measured in the same manner as in the case of (P1)A.

(P1)E: Cu particles (MA Series, manufactured by MITSUI MINING & SMELTING CO., LTD.) were heated at 200°C for 1 hour in an oven, and metal particles in which Cu particles are covered with a $Cu_2O$ layer were obtained. The average particle size (D50) was 10 μm, and the degree of oxidation H was 0.05. The degree of oxidation H and the average particle size (D50) were measured in the same manner as in the case of (P1)A.

(P1)F: Cu particles (1030Y Series, manufactured by MITSUI MINING & SMELTING CO., LTD.) were heated at 180°C for 4 hours in an oven, and metal particles in which Cu particles are covered with a $Cu_2O$ layer were obtained. The average particle size (D50) was 0.5 μm, and the degree of oxidation H was 0.1. The degree of oxidation H and the average particle size (D50) were measured in the same manner as in the case of (P1)A.

(P1)G: Cu particles (MA Series, manufactured by MITSUI MINING & SMELTING CO., LTD.) were heated at 200°C for 40 hours in an oven, and metal particles in which Cu particles are covered with a $Cu_2O$ layer were obtained. The average particle size (D50) was 50 μm, and the degree of oxidation H was 0.05. The degree of oxidation H and the average particle size (D50) were measured in the same manner as in the case of (P1)A.

(P1)H: Ag particles (SP Series, manufactured by MITSUI MINING & SMELTING CO., LTD.) were used. The average particle size (D50) was 5 μm, and the degree of oxidation H was 0. The average particle size (D50) was measured in the same manner as in the case of (P1)A.

(P1)I: Cu particles (MA Series, manufactured by MITSUI MINING & SMELTING CO., LTD.) were heated at 200°C for 30 hours in an oven, and metal particles in which Cu particles are covered with a $Cu_2O$ layer were obtained. The average particle size (D50) was 25 μm, and the degree of oxidation H was 0.05. The degree of oxidation H and the average particle size (D50) were measured in the same manner as in the case of (P1)A.

(P1)J: Cu particles (MA Series, manufactured by MITSUI MINING & SMELTING CO., LTD.) were heated at 170°C for 4 hours in an oven, and metal particles in which Cu particles are covered with a $Cu_2O$ layer were obtained. The average particle size (D50) was 5 μm, and the degree of oxidation H was 0.31. The degree of oxidation H and the average particle size (D50) were measured in the same manner as in the case of (P1)A.

(P1)K: Cu particles (1030Y Series, manufactured by MITSUI MINING & SMELTING CO., LTD.) were heated at 170°C for 3 hours in an oven, and metal particles in which Cu particles are covered with a $Cu_2O$ layer were obtained. The average particle size (D50) was 0.5 μm, and the degree of oxidation H was 0.07. The degree of oxidation H and the average particle size (D50) were measured in the same manner as in the case of (P1)A.

[Second metal particles (P2)]

(P2)A: Particles in which Cu particles were covered with Sn (1050Y Series, manufactured by MITSUI MINING & SMELTING CO., LTD.) were used. The average particle size (D50) was 2 μm. The average particle size (D50) was measured in the same manner as in the case of (P1)A.

(P2)B: Particles in which Cu particles were covered with Sn (1050Y Series, manufactured by MITSUI MINING & SMELTING CO., LTD.) were used. The average particle size (D50) was 5 μm. The average particle size (D50) was measured in the same manner as in the case of (P1)A.

(P2)C: Particles in which Cu particles were covered with SnNiCu (a developed product, manufactured by KYOKUTO BOEKI KAISHA, LTD.) were used. The average particle size (D50) was 2 μm. The average particle size (D50) was measured in the same manner as in the case of (P1)A.

(P2)D: Particles in which Cu particles were covered with SnNiCu (a developed product, manufactured by KYOKUTO BOEKI KAISHA, LTD.) were used. The average particle size (D50) was 5 μm. The average particle size (D50) was measured in the same manner as in the case of (P1)A.

(P2)E: Particles in which Cu particles were covered with Sn (1050Y Series, manufactured by MITSUI MINING & SMELTING CO., LTD.) were used. The average particle size (D50) was 0.5 μm. The average particle size (D50) was measured in the same manner as in the case of (P1)A.

(P2)F: Particles in which Cu particles were covered with Sn (1050Y Series, manufactured by MITSUI MINING & SMELTING CO., LTD.) were used. The average particle size (D50) was 20 μm. The average particle size (D50) was measured in the same manner as in the case of (P1)A.
(P2)G: Particles in which Cu particles were covered with In (a developed product, manufactured by KYOKUTO BOEKI KAISHA, LTD.) were used. The average particle size (D50) was 2 μm. The average particle size (D50) was measured in the same manner as in the case of (P1)A.
(P2)H: Sn particles (STC Series, manufactured by MITSUI MINING & SMELTING CO., LTD.) were used. The average particle size (D50) was 2 μm. The average particle size (D50) was measured in the same manner as in the case of (P1)A.
(P2)I: Particles in which Cu particles were covered with Sn (1050Y Series, manufactured by MITSUI MINING & SMELTING CO., LTD.) were used. The average particle size (D50) was 12 μm. The average particle size (D50) was measured in the same manner as in the case of (P1)A.

[Third metal particles (P3)]

(P3)A: Sn particles (ST Series, manufactured by MITSUI MINING & SMELTING CO., LTD.) were used. The average particle size (D50) was 5 μm. The average particle size (D50) was measured in the same manner as in the case of (P1)A.
(P3)B: SnNiCu particles (STC Series, manufactured by MITSUI MINING & SMELTING CO., LTD.) were used. The average particle size (D50) was 5 μm. The average particle size (D50) was measured in the same manner as in the case of (P1)A.

[Thermosetting resin]

Thermosetting resin A: A bismaleimide resin (BMI-3000 (trade name), manufactured by Designer Molecules, Inc., number average molecular weight 3000) and a polymerization initiator (NOFMER BC (trade name), 2,3-dimethyl-2,3-diphenylbutane, manufactured by NOF CORPORATION) were mixed at a mass ratio of 100 : 5, and a maleimide resin was obtained.

[Flux]

Flux A: An organic sulfide (MPSMA (registered trademark), bis(4-methacryloylthiophenyl) sulfide, manufactured by Sumitomo Seika Chemicals Company, Limited.)
Flux B: A phosphine-based (DPPST, p-styryldiphenylphosphine, manufactured by HOKKO SANGYO Co., LTD.)

<Production of bonding material composition (bonding paste)>

(Example 1)

First, (P1)A was immersed in a solution of flux A and stirred at 3000 rpm at a power output of 50 W for 120 minutes using an ultrasonic device (NS-56 (trade name), manufactured by MICROTEC CO., LTD.) to coordinate the flux to the surfaces of the first metal particles (P1). The flux content was specified using FT-IR (Fourier transform infrared spectroscopy) measurement. Next, the above-described (P1)A modified with a flux, (P2)A, and cyclopentanone (manufactured by KANTO CHEMICAL CO., INC.) as a solvent were mixed at the blending proportions indicated in Tables 1 to 3 and stirred to obtain a bonding material composition according to Example 1, that is, a bonding paste.

(Examples 2 to 4 and 10 to 20, and Comparative Examples 1 to 5)

Bonding material compositions, that is, bonding pastes, according to Examples 2 to 4 as well as 10 to 20 and Comparative Examples 1 to 5 were obtained in the same manner as in Example 1, using the raw materials and blending proportions indicated in Tables 1 and 2. In Comparative Example 5, the first metal particle surface was not modified with a flux, and all the raw materials were kneaded.

(Example 5)

First, (P1)A was immersed in a solution of flux B and stirred at 3000 rpm at a power output of 50 W for 120 minutes

using an ultrasonic device (NS-56 (trade name), manufactured by MICROTEC CO., LTD.) to coordinate the flux to the surfaces of the first metal particles (P1). Thereafter, a bonding material composition, that is, a bonding paste, according to Example 5 was obtained in the same manner as in Example 1, using the raw materials and blending proportions indicated in Tables 1 and 2.

(Example 6)

A bonding material composition, that is, a bonding paste, according to Example 6 was obtained in the same manner as in Example 5, using the raw materials and blending proportions indicated in Tables 1 and 2.

<Production of bonding material layer>

(Example 7)

First, (P1)A was immersed in a solution of flux A and stirred at 3000 rpm at a power output of 50 W for 120 minutes using an ultrasonic device (NS-56 (trade name), manufactured by MICROTEC CO., LTD.) to coordinate the flux to the surfaces of the first metal particles (P1). The flux content was specified using FT-IR (Fourier transform infrared spectroscopy) measurement. Next, the above-described (P1)A modified with a flux, (P2)A, thermosetting resin A, and cyclopentanone (manufactured by KANTO CHEMICAL CO., INC.) as a solvent were mixed at the blending proportions indicated in Tables 1 and 2 and stirred, the mixture was applied on a TEFLON (registered trademark) sheet such that the film thickness after drying would be 100 μm, the applied mixture was dried at 100°C for 5 minutes and peeled off from the TEFLON (registered trademark) sheet to obtain a bonding material layer according to Example 7.

(Examples 8 and 9)

Bonding material layers according to Examples 8 and 9 were obtained in the same manner as in Example 7, using the raw materials and blending proportions indicated in Tables 1 and 2.

<Evaluation>

With regard to the bonding material compositions (bonding pastes) and the bonding material layers according to Examples and Comparative Examples obtained as described above, evaluation of characteristics described below was performed. The results are shown in Table 3.

(Examples 1 to 6 and 10 to 20, and Comparative Examples 1 to 5)

[Shear strength]

50 mg of a bonding material composition (bonding paste) according to each of the above-described Examples and Comparative examples was applied on a lead frame made of Cu. A chip was prepared by dicing an Au-plated Si wafer into squares that measured 3 mm on each side, the chip was placed on the applied bonding material composition (bonding paste) such that the Au plating was in contact with the bonding material composition (bonding paste), the chip was lightly pressed with tweezers to adhere to the bonding material composition (bonding paste), and thus a laminated body was obtained. This laminated body was fired at 280°C for 15 minutes in a nitrogen atmosphere to obtain a sample for measurement.

With regard to the obtained measurement sample, a die shear measuring device (universal bond tester Series 4000 manufactured by Nordson Advanced Technology (Japan) K.K.) was used, a scratching tool of the bond tester was collided against the chip side surface of the above-described measurement sample at 100 μm/s, and then the stress generated when the chip/lead frame bonding broke was measured as the shear strength at 260°C. A sample having a shear strength of 10.0 MPa or greater was considered a good product and was rated as "O"; a sample having a shear strength of less than 10.0 MPa and 3.0 or greater was considered an acceptable product and was rated as "Δ"; and a sample having a shear strength of less than 3.0 MPa was considered a poor product and was rated as " × ".

[Heat resistance]

Next, with regard to samples for measurement obtained in the same manner as in the case of the above-described samples for measurement, as a thermal shock test (TCT), a treatment process of maintaining a sample for 10 minutes under the temperature conditions of -65°C and then maintaining the sample for 10 minutes under the temperature

conditions of 175°C was performed as one cycle, and 500 cycles of this treatment were carried out. For the samples for measurement after this treatment, the shear strength after TCT was measured by a method similar to that used for the above-described shear strength before TCT. A higher shear strength after TCT means more excellent heat resistance. A sample having a shear strength after TCT of 7.0 MPa or greater was considered a good product and was rated as "O"; a sample having a shear strength after TCT of less than 7.0 MPa and 2.0 MPa or greater was considered an acceptable product and was rated as "Δ"; and a sample having a shear strength after TCT of less than 2.0 MPa was considered a poor product and was rated as "×".

[Electrical conductivity]

100 mg of each of the bonding material compositions according to Examples and Comparative Examples was applied on a glass substrate and fired at 280°C for 15 minutes to obtain a sample for measurement. For this sample for measurement, the resistance value was measured by a four-probe method according to JIS-K7194-1994, and the volume resistivity was calculated. For the measurement of the resistance value, LORESTA GX manufactured by Mitsubishi Chemical Analytech Co., Ltd. was used. The reciprocal of the volume resistivity is electrical conductivity, and a smaller volume resistivity means more excellent electrical conductivity.

In the present Examples, a sample having a volume resistivity of less than $1.0\times10^{-5}$ Ω·cm was considered a good product and was rated as "O"; a sample having a volume resistivity of $1.0\times10^{-5}$ Ω·cm or greater and $5.0\times10^{-5}$ Ω·cm or less was considered an acceptable product and was rated as "Δ"; and a sample having a volume resistivity of greater than $5.0\times10^{-5}$ Ω·cm was considered a poor product and was rated as "×".

[Heat dissipation properties]

The thermal conductivity is determined by expressing the volume resistivity as IACS conductivity. The volume resistivity of annealed standard copper, $1.724\times10^{-6}$ Ω·cm, was designated as 100 IACS%, the volume resistivity was expressed as a ratio, and the thermal conductivity was calculated based on copper by dividing the thermal conductivity of copper at 100 IACS%, which is 360 W, by the ratio. A larger thermal conductivity means more excellent heat dissipation properties.

In the present Examples, a sample having a thermal conductivity of 70 W/m·K or greater was considered an excellent product and was rated as "⊙"; a sample having a thermal conductivity of less than 70 W/m·K and 40 W/m·K or greater was considered a good product and was rated as "○"; a sample having a thermal conductivity of less than 40 W/m·K and 17 W/m·K or greater was considered an acceptable product and was rated as "Δ"; and a sample having a thermal conductivity of less than 17 W/m·K was considered as a poor product and was rated as "×".

(Examples 7 to 9)

[Shear strength]

Each of the bonding material layers according to the above-described Examples 7 to 9 was placed on a lead frame made of Cu. A chip was prepared by dicing an Au-plated Si wafer into squares that measured 3 mm on each side, the chip was placed on the bonding material layers such that the Au plating was in contact with the bonding material layer, and a laminated body was obtained. This laminated body was fired at 280°C for 15 minutes in a nitrogen atmosphere, and a sample for measurement was obtained.

With regard to the obtained measurement sample, the shear strength was measured by a method similar to that used for the above-mentioned shear strength, and evaluation of the shear strength was performed by a similar method.

[Heat resistance]

Next, with regard to samples for measurement obtained in the same manner as in the case of the above-described samples for measurement, the shear strength after TCT was measured by a method similar to that used for the above-mentioned shear strength after TCT, and evaluation of heat resistance was performed by a similar method.

[Electrical conductivity]

The bonding material layers according to Examples 7 to 9 were fired at 280°C for 15 minutes to obtain samples for measurement. With regard to these samples for measurement, the volume resistivity was calculated by a method similar to the above-mentioned method, and evaluation of the electrical conductivity was performed by a similar method.

[Heat dissipation properties]

With regard to these samples for measurement, the thermal conductivity was calculated by a method similar to the above-mentioned method, and evaluation of the heat dissipation properties was performed by a similar method.

[Table 1]

| | Type of bonding material composition | | | | |
|---|---|---|---|---|---|
| | Metal particles (P) | | | | Flux |
| | (P1) | (P2) | (P3) | Proportion of each metal particle P1/P2/P3 (wt%) | |
| Example 1 | A | A | - | 61/39/0 | A |
| Example 2 | E | B | - | 60/40/0 | A |
| Example 3 | E | D | - | 59/41/0 | A |
| Example 4 | B | A | - | 62/38/0 | A |
| Example 5 | A | A | A | 57/36/7 | B |
| Example 6 | A | C | B | 54/37/9 | B |
| Example 7 | A | A | - | 61/39/0 | A |
| Example 8 | A | A | A | 57/36/7 | A |
| Example 9 | A | A | A | 57/36/7 | B |
| Example 10 | F | A | - | 60/40/0 | A |
| Example 11 | A | E | - | 61/39/0 | A |
| Example 12 | G | F | - | 59/41/0 | A |
| Example 13 | C | A | A | 57/36/7 | A |
| Example 14 | A | A | - | 61/39/0 | A |
| Example 15 | A | A | - | 61/39/0 | A |
| Example 16 | I | I | - | 59/41/0 | A |
| Example 17 | J | A | - | 62/38/0 | A |
| Example 18 | K | E | - | 61/39/0 | A |
| Example 19 | A | A | - | 61/39/0 | A |
| Example 20 | A | A | A | 57/36/7 | B |
| Comparative Example 1 | D | A | - | 61/39/0 | A |
| Comparative Example 2 | H | A | - | 60/40/0 | A |
| Comparative Example 3 | A | G | - | 61/39/0 | A |
| Comparative Example 4 | A | H | - | 61/39/0 | A |
| Comparative Example 5 | A | A | - | 61/39/0 | - |

[Table 2]

| | Ratio in bonding material composition (wt%) | | | | | | Content proportion of Sn with respect to total amount of 100 wt% of Cu (wt%) | Content proportion of flux with respect to metal particles (P) (wt%) |
|---|---|---|---|---|---|---|---|---|
| | Sn | Cu | Flux | Solvent | Thermosetting resin | Curing agent | | |
| Example 1 | 34.2 | 54.4 | 1.10 | 9.0 | - | - | 62.87 | 0.50 |
| Example 2 | 34.2 | 54.8 | 1.10 | 8.7 | - | - | 62.41 | 0.50 |

(continued)

| | Ratio in bonding material composition (wt%) | | | | | | Content proportion of Sn with respect to total amount of 100 wt% of Cu (wt%) | Content proportion of flux with respect to metal particles (P) (wt%) |
|---|---|---|---|---|---|---|---|---|
| | Sn | Cu | Flux | Solvent | Thermosetting resin | Curing agent | | |
| Example 3 | 34.4 | 55.0 | 1.10 | 8.7 | - | - | 62.55 | 0.50 |
| Example 4 | 34.2 | 54.4 | 1.10 | 8.7 | - | - | 62.87 | 0.50 |
| Example 5 | 34.2 | 54.4 | 1.10 | 9.0 | - | - | 62.87 | 0.50 |
| Example 6 | 33.2 | 54.1 | 1.10 | 8.7 | - | - | 61.37 | 0.50 |
| Example 7 | 30.6 | 48.8 | 0.95 | 7.6 | 9.0 | 0.5 | 62.70 | 0.50 |
| Example 8 | 30.5 | 48.9 | 0.94 | 7.5 | 9.0 | 0.5 | 62.37 | 0.50 |
| Example 9 | 30.5 | 48.9 | 0.94 | 7.5 | 9.0 | 0.5 | 62.37 | 0.50 |
| Example 10 | 34.3 | 54.5 | 1.10 | 8.6 | - | - | 62.94 | 0.50 |
| Example 11 | 34.2 | 54.4 | 1.10 | 8.7 | - | - | 62.87 | 0.50 |
| Example 12 | 34.3 | 54.5 | 1.10 | 8.6 | - | - | 62.94 | 0.50 |
| Example 13 | 33.5 | 53.8 | 1.10 | 8.6 | - | - | 62.27 | 0.50 |
| Example 14 | 27.2 | 50.1 | 1.10 | 10.0 | - | - | 54.29 | 0.50 |
| Example 15 | 34.3 | 54.6 | 9.00 | 1.5 | - | - | 62.82 | 5.00 |
| Example 16 | 34.2 | 54.4 | 1.10 | 8.8 | - | - | 62.87 | 0.50 |
| Example 17 | 34.2 | 54.5 | 1.10 | 8.6 | - | - | 62.75 | 0.50 |
| Example 18 | 34.5 | 54.8 | 1.10 | 8.6 | - | - | 62.96 | 0.50 |
| Example 19 | 34.2 | 54.4 | 0.10 | 10.1 | - | - | 62.87 | 0.05 |
| Example 20 | 34.2 | 54.5 | 0.10 | 10.0 | - | - | 62.75 | 0.05 |
| Comparative Example 1 | 34.2 | 54.4 | 1.10 | 8.6 | - | - | 62.87 | 0.50 |
| Comparative Example 2 | 34.2 | 30.1 | 1.10 | 8.5 | - | - | 113.62 | 0.50 |
| Comparative Example 3 | 34.3 | 54.7 | 1.10 | 8.6 | - | - | 62.71 | 0.50 |
| Comparative Example 4 | 34.3 | 54.6 | 1.10 | 8.5 | - | - | 62.82 | 0.50 |
| Comparative Example 5 | 34.2 | 54.6 | 0.00 | 8.6 | - | - | 62.64 | 0.00 |

[Table 3]

| | Evaluation | | | |
|---|---|---|---|---|
| | Shear strength (MPa) | Heat resistance: shear strength after TCT (MPa) | Electrical conductivity: volume resistivity (× 10-5 Ω·cm) | Heat dissipation properties: thermal conductivity (W/m·K) |
| Example 1 | ○ | ○ | ○ | ⊙ |
| Example 2 | ○ | ○ | ○ | ⊙ |
| Example 3 | ○ | ○ | ○ | ⊙ |

(continued)

| | Evaluation | | | |
|---|---|---|---|---|
| | Shear strength (MPa) | Heat resistance: shear strength after TCT (MPa) | Electrical conductivity: volume resistivity (× 10-5 Ω·cm) | Heat dissipation properties: thermal conductivity (W/m·K) |
| Example 4 | ○ | ○ | ○ | ⊙ |
| Example 5 | ○ | ○ | ○ | ⊙ |
| Example 6 | ○ | ○ | ○ | ⊙ |
| Example 7 | ○ | ○ | ○ | ○ |
| Example 8 | ○ | ○ | ○ | ○ |
| Example 9 | ○ | ○ | ○ | ○ |
| Example 10 | Δ | Δ | Δ | Δ |
| Example 11 | Δ | Δ | Δ | Δ |
| Example 12 | Δ | Δ | Δ | Δ |
| Example 13 | Δ | Δ | Δ | Δ |
| Example 14 | Δ | Δ | Δ | Δ |
| Example 15 | Δ | Δ | Δ | Δ |
| Example 16 | Δ | Δ | ○ | Δ |
| Example 17 | Δ | Δ | ○ | Δ |
| Example 18 | Δ | Δ | Δ | Δ |
| Example 19 | ○ | ○ | ○ | ○ |
| Example 20 | ○ | ○ | ○ | ○ |
| Comparative Example 1 | Δ | × | × | × |
| Comparative Example 2 | Δ | × | Δ | × |
| Comparative Example 3 | Δ | × | × | × |
| Comparative Example 4 | Δ | × | × | Δ |
| Comparative Example 5 | × | × | × | × |

In the bonding material compositions (bonding pastes) and bonding material layers according to Examples 1 to 20, since metal particles in which Cu particles were covered with a $Cu_2O$ layer, and metal particles in which Cu particles were covered with Sn or SnNiCu were used, diffusion was suppressed until the $Cu_2O$ layer was reduced, and therefore, the reaction proceeded mildly, which allowed an overall uniform reaction to occur. Therefore, satisfactory results were obtained for all of the shear strength, heat resistance, electrical conductivity, and heat dissipation properties.

Regarding the bonding material composition according to Comparative Example 1, since Cu particles that were not covered with a $Cu_2O$ layer were used as the first metal particles (P1), the reactivity with molten Sn was satisfactory, the diffusion reaction with the Cu particle surface was not uniformly formed, a large amount of CusSn was formed in a region where the reaction had sufficiently proceeded, while on the other hand, there were portions where the reaction occurred insufficiently or unreacted portions, and a network structure with Cu particles as the core was not obtained, resulting in poor heat resistance, electrical conductivity, and heat dissipation properties.

In the bonding material composition according to Comparative Example 2, since Ag particles having a satisfactory state of oxidation were used as the first metal particles (P1), as the Ag particles reacted with Sn, and a structure in which the regions of $Ag_3Sn$ and CusSn were separated was formed, resulting in poor heat resistance and heat dissipation properties.

In the bonding material composition according to Comparative Example 3, since indium-plated Cu particles were used as the second metal particles (P2), although indium melts at a low temperature, indium has poor diffusion reactivity with Cu, and as a result, CuIn compounds were only partially formed, resulting in poor heat resistance, electrical conductivity, and heat dissipation properties.

In the bonding material composition according to Comparative Example 4, pure Sn particles were used as the

second metal particles (P2), and therefore, a balance between the start of melting of Sn and the reduction of $Cu_2O$ was not achieved, molten Sn reacted with Au on the back surface of the Si chip, and the reaction with Cu particles was insufficient, resulting in poor heat resistance.

In the bonding material composition according to Comparative Example 5, since no flux was used, reduction of $Cu_2O$ did not proceed, Sn could not react with the Cu core, and the structure of CusSn was not formed, resulting in poor shear strength, heat resistance, electrical conductivity, as well as heat dissipation properties.

## Claims

**1.** A bonding material composition comprising:

metal particles (P) including first metal particles (P1) and second metal particles (P2); and
a flux,
wherein the first metal particles (P1) are composed of a core (C1) made of Cu and a $Cu_2O$ layer covering the core (C1), and
the second metal particles (P2) are composed of a core (C2) made of Cu, and Sn or Sn-containing solder covering the core (C2).

**2.** The bonding material composition according to claim 1, wherein the first metal particles (P1) have an average particle size of 1 to 20 μm, and
the second metal particles (P2) have an average particle size of 1 to 10 μm.

**3.** The bonding material composition according to claim 1 or 2, wherein a proportion of Sn in the Sn or Sn-containing solder covering the core (C2) is 55% to 65% by mass with respect to a total amount of 100% by mass of the Cu of the core (C1) and the Cu of the core (C2).

**4.** The bonding material composition according to any one of claims 1 to 3, wherein when a diffraction intensity of Cu (111) plane of the first metal particles (P1) as measured by X-ray diffraction is designated as H1, and a diffraction intensity of $Cu_2O$ (111) plane is designated as H2, a degree of oxidation H of the first metal particles (P1) represented by the following Formula 1 is 0.05 to 0.3.

$$H = H2/(H1 + H2) \qquad \text{[Formula 1]}$$

**5.** The bonding material composition according to any one of claims 1 to 4, wherein the metal particles (P) further include third metal particles (P3), and
the third metal particles (P3) are Sn particles or Sn-containing solder particles.

**6.** The bonding material composition according to claim 5, wherein a proportion of Sn in the Sn or Sn-containing solder covering the core (C2) and Sn in the Sn particles or Sn-containing solder particles is 55% to 65% by mass with respect to a total amount of 100% by mass of the Cu of the core (C1) and the Cu of the core (C2).

**7.** The bonding material composition according to any one of claims 1 to 6, wherein the flux has reducing properties and does not include water in reaction products.

**8.** The bonding material composition according to any one of claims 1 to 7, wherein the flux includes at least one of phosphines represented by the following General Formula (1) and sulfides represented by the following General Formula (2), provided that R's in the following General Formulas (1) and (2) each independently represent an organic group, and R's may be identical with or different from each other.

[Chemical Formula 1]

$$P-(R)_3 \quad \cdots (1)$$

$$S-(R)_2 \quad \cdots (2)$$

**9.** The bonding material composition according to any one of claims 1 to 8, wherein a content proportion of the flux with respect to the metal particles (P) is 0.05% to 0.5% by mass.

**10.** The bonding material composition according to any one of claims 1 to 9, wherein a content proportion of the metal particles (P) is 80% to 95% by mass with respect to a total amount of the bonding material composition.

**11.** The bonding material composition according to any one of claims 1 to 10, wherein when heated at 240°C or higher, the bonding material composition forms a bonding layer bonding a first member and a second member, and
the bonding layer has a network structure containing Cu particles bonded by compounds of Cu and Sn.

**12.** The bonding material composition according to any one of claims 1 to 11, further comprising a thermosetting resin.

**13.** A method for manufacturing the bonding material composition according to any one of claims 1 to 12, the method comprising
a step of mixing the first metal particles (P1) and the second metal particles (P2) and stirring the mixture.

**14.** A bonding film comprising a bonding material layer,
wherein the bonding material layer is formed using the bonding material composition according to any one of claims 1 to 12.

**15.** The bonding film according to claim 14, wherein the bonding material layer has a thickness of 10 to 100 μm.

**16.** A method for manufacturing a bonded body, the bonded body bonding a first member and a second member by means of a bonding layer using the bonding material composition according to any one of claims 1 to 12,
wherein the bonding material composition is interposed between the first member and the second member and heated at a temperature of 240°C or higher, whereby the flux removes the $Cu_2O$ layer of the first metal particles (P1), the Sn or the Sn-containing solder of the second metal particles (P2) melts and then reacts with the Cu of the core (C1) and the Cu of the core (C2), and the bonding layer having a network structure containing Cu particles bonded by compounds of Cu and Sn is formed.

**17.** A method for manufacturing a bonded body, the bonded body bonding a first member and a second member by means of a bonding layer using the bonding film according to claim 14 or 15,
wherein the bonding material layer is interposed between the first member and the second member and heated at a temperature of 240°C or higher, whereby the flux removes the $Cu_2O$ layer of the first metal particles (P1), the Sn or the Sn-containing solder of the second metal particles (P2) melts and then reacts with the Cu of the core (C1) and the Cu of the core (C2), and the bonding layer having a network structure containing Cu particles bonded by compounds of Cu and Sn is formed.

**18.** A bonded body, bonding a first member and a second member by means of a bonding layer using the bonding material composition according to any one of claims 1 to 12,
wherein the bonding layer is formed by heating the bonding material composition at a temperature of 240°C or higher.

**19.** A bonded body, bonding a first member and a second member by means of a bonding layer using the bonding film according to claim 14 or 15,
wherein the bonding layer is formed by heating the bonding material layer at a temperature of 240°C or higher.

**20.** The bonded body according to claim 18 or 19, wherein the bonding layer has a network structure containing Cu particles bonded by compounds of Cu and Sn.

**21.** The bonded body according to any one of claims 18 to 20, wherein the bonding layer has a thickness of 10 to 300 $\mu$m.

**INTERNATIONAL SEARCH REPORT**

International application No.
**PCT/JP2023/004946**

**A. CLASSIFICATION OF SUBJECT MATTER**

***B23K 35/22***(2006.01)i; ***B22F 1/00***(2022.01)i; ***B22F 1/16***(2022.01)i; ***B22F 1/17***(2022.01)i; ***B23K 1/00***(2006.01)i; ***B23K 35/363***(2006.01)i; ***H01B 1/22***(2006.01)i
FI: B23K35/22 310A; B23K35/363 E; B22F1/00 L; B22F1/16; B22F1/17; B23K1/00 Z; H01B1/22 A; H01B1/22 B

According to International Patent Classification (IPC) or to both national classification and IPC

**B. FIELDS SEARCHED**

Minimum documentation searched (classification system followed by classification symbols)

B23K35/22; B22F1/00; B22F1/16; B22F1/17; B23K1/00; B23K35/363; H01B1/22

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br><br><br>A | WO 2006/075459 A1 (MURATA MANUFACTURING CO., LTD.) 20 July 2006 (2006-07-20)<br>paragraphs [0054]-[0060], [0065]-[0073], example 13 | 1, 4-5, 7-21<br><br><br>2-3, 6 |
| Y | JP 2019-059967 A (THE FURUKAWA ELECTRIC CO., LTD.) 18 April 2019 (2019-04-18)<br>paragraphs [0062]-[0088], fig. 1 | 1, 4-5, 7-21 |
| Y | JP 2014-156626 A (THE FURUKAWA ELECTRIC CO., LTD.) 28 August 2014 (2014-08-28)<br>paragraph [0025] | 4, 7-21 |
| Y | WO 2017/138255 A1 (THE FURUKAWA ELECTRIC CO., LTD.) 17 August 2017 (2017-08-17)<br>paragraphs [0016]-[0059] | 12-21 |
| A | JP 2011-062736 A (SANYO SPECIAL STEEL CO., LTD.) 31 March 2011 (2011-03-31) | 1-21 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 May 2023** | **16 May 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2023/004946**

**C. DOCUMENTS CONSIDERED TO BE RELEVANT**

| Category* | Citation of document, with indication, where appropriate, of the relevant passages | Relevant to claim No. |
|---|---|---|
| A | JP 2013-212524 A (KOKI K.K.) 17 October 2013 (2013-10-17) | 1-21 |
| A | JP 2020-040075 A (MITSUBISHI MATERIALS CORP.) 19 March 2020 (2020-03-19) | 1-21 |
| A | WO 2018/025798 A1 (THE FURUKAWA ELECTRIC CO., LTD.) 08 February 2018 (2018-02-08) | 1-21 |
| A | WO 2017/007011 A1 (THE FURUKAWA ELECTRIC CO., LTD.) 12 January 2017 (2017-01-12) | 1-21 |

Form PCT/ISA/210 (second sheet) (January 2015)

**INTERNATIONAL SEARCH REPORT**
**Information on patent family members**

International application No.
**PCT/JP2023/004946**

| Patent document cited in search report | Publication date (day/month/year) | Patent family member(s) | Publication date (day/month/year) |
|---|---|---|---|
| WO 2006/075459 A1 | 20 July 2006 | US 2007/0245852 A1<br>paragraphs [0072]-[0078], [0082]-[0089], example 13<br>EP 1837119 A1<br>CN 101087673 A<br>KR 10-2007-0086809 A | |
| JP 2019-059967 A | 18 April 2019 | (Family: none) | |
| JP 2014-156626 A | 28 August 2014 | (Family: none) | |
| WO 2017/138255 A1 | 17 August 2017 | US 2018/0346767 A1<br>paragraphs [0029]-[0076]<br>EP 3415579 A1<br>CN 108473831 A<br>KR 10-2018-0108633 A | |
| JP 2011-062736 A | 31 March 2011 | (Family: none) | |
| JP 2013-212524 A | 17 October 2013 | (Family: none) | |
| JP 2020-040075 A | 19 March 2020 | (Family: none) | |
| WO 2018/025798 A1 | 08 February 2018 | EP 3495089 A1<br>CN 109562493 A | |
| WO 2017/007011 A1 | 12 January 2017 | US 2019/0019594 A1<br>CN 107848077 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006032888 A
- JP 6061248 B
- WO 2017138255 A
- JP 6753349 B